## Europäisches Patentamt
## European Patent Office
## Office européen des brevets

(11) Veröffentlichungsnummer: **0 220 621 B1**

(12) **EUROPÄISCHE PATENTSCHRIFT**

(45) Veröffentlichungstag der Patentschrift: **11.09.91**

(51) Int. Cl.⁵: **B32B 27/32**

(21) Anmeldenummer: **86114372.5**

(22) Anmeldetag: **17.10.86**

(54) **Biaxial orientierte, koextrudierte Mehrschichtfolie.**

(30) Priorität: **26.10.85 DE 3538102**

(43) Veröffentlichungstag der Anmeldung:
**06.05.87 Patentblatt 87/19**

(45) Bekanntmachung des Hinweises auf die
Patenterteilung:
**11.09.91 Patentblatt 91/37**

(84) Benannte Vertragsstaaten:
**BE DE FR GB IT NL**

(56) Entgegenhaltungen:
**DE-A- 2 402 120**
**GB-A- 1 453 621**
**GB-A- 1 563 691**
**GB-A- 2 055 688**

(73) Patentinhaber: **HOECHST AKTIENGESELL-
SCHAFT**
**Postfach 80 03 20**
**W-6230 Frankfurt am Main 80(DE)**

(72) Erfinder: **Bothe, Lothar, Dr. Dipl.-Chem.**
**Am Heiligenhaus 9**
**W-6500 Mainz(DE)**
Erfinder: **Crass, Günther, Dipl.-Ing.**
**Bachstrasse 7**
**W-6204 Taunusstein-Wehen(DE)**
Erfinder: **Dallmann, Hermann, Dr. Dipl.-Chem.**
**Erbsenacker 29**
**W-6200 Wiesbaden-Naurod(DE)**

**Beschreibung**

Die Erfindung betrifft eine biaxial orientierte, koextrudierte Mehrschichtfolie mit einer Basisschicht aus Polypropylen, auf die ein- oder beidseitig Deckschichten aufgebracht sind.

Für technische Anwendungen werden biaxial orientierte, koextrudierte Polypropylenfolien eingesetzt. Da Polypropylen unpolar ist, wodurch die Haftung für andere Schichten auf der Oberfläche der Polypropylenfolie sehr schlecht ist, müssen für nahezu alle Anwendungsfälle die Haftungseigenschaften der Polypropylenfolie durch Vorbehandlung mittels einer Koronaentladung oder durch Flammbehandlung verbessert werden.

Durch eine derartige Oberflächenvorbehandlung der Polypropylenfolie wird die Oberflächenspannung von üblicherweise ca. 30 mN/m auf 36 bis 42 mN/m angehoben, wodurch die Bedruckbarkeit der Folie sowie die Beschichtbarkeit mit Kaltsiegelschichten, wie beispielsweise Klebern oder mit anderen Schichten signifikant verbessert werden.

Die Behandlungswirkung klingt jedoch mit der Zeit merklich ab, so daß die Folie nur eine begrenzte Zeitspanne verarbeitet werden kann. Solchermaßen vorbehandelte Polypropylenfolien sind als Bestandteil von Verpackungsfolienverbunden wenig geeignet, da mit der Vorbehandlung durch eine Koronaentladung eine starke Geruchsbeeinträchtigung der Folie einhergeht, die diese nicht nur als Verpackungsmaterial, sondern auch für technische Anwendungen häufig ungeeignet macht.

Ein weiterer Nachteil bekannter Polypropylenfolien, die zur Verbesserung der Bedruck- und Kaschierbarkeit, auf beiden Seiten koronabehandelt sind, besteht darin, daß diese als Rollen aufgewickelten Folien zum Verblocken auf der Rolle neigen.

Aufgabe der Erfindung ist es, eine Mehrschichtfolie auf Basis von Polypropylen für technische Einsätze zu schaffen, deren Basisschicht ohne Vorbehandlung durch eine Koronaentladung und ohne Flammbehandlung ihrer Oberflächen gut bedruck- und beschichtbar ist und die gute Benetzungseigenschaften und keine Neigung zum Verblocken auf der Rolle besitzt und bei der sich diese Eigenschaften in Abhängigkeit von der Zeit nicht verschlechtern.

Diese Aufgabe wird erfindungsgemäß dadurch gelöst, daß auf die nicht vorbehandelte Basisschicht zumindest eine bedruckbare Deckschicht koextrudiert ist, die aus einem Kopolyester in Form von Polykondensaten aus Terephthalsäure, Isophthalsäure und Ethylenglykol oder Butandiol besteht, daß die Deckschicht ohne vorangehende Koronaentladung bedruckbar ist und daß die Dichte der Mehrschichtfolie 0,920 bis 0,991 g/cm³ beträgt.

Selbstverständlich ist es auch möglich, das die Basisschicht beidseitig mit einer Deckschicht aus Kopolyester in Form von Polykondensaten aus Terephthalsäure, Isophthalsäure und Ethylenglykol oder Butandiol beschichtet ist.

In weiterer Ausgestaltung der Erfindung ist die eine Deckschicht mit einer Kaltsiegelschicht und die andere Deckschicht mit Silikon beschichtet. Die Gesamtdicke der Mehrschichtfolie beträgt zweckmäßigerweise 10,4 bis 56 µm, insbesondere 12 bis 40 µm. Dabei wird die Dicke der einzelnen Deckschicht von 0,2 bis 3 µm, insbesondere von 0,5 bis 1,5 µm gewählt.

Die Mehrschichtfolie nach der Erfindung wird insbesondere als Kaschierfolie für Kartenwerke, Bucheinbände, teure Papiere u.dgl., als Basisfolie für Klebebänder sowie als Verbundbestandteil mehrschichtiger Verbundmaterialien für die Verpackung verwendet.

Das Polypropylen der Basisschicht kann ein Homo- oder Kopolymerisat des Propylens oder eine Mischung aus Propylen-Homo- und Propylen-Kopolymerisaten sein. In den Kopolymerisaten beträgt die Komonomermenge im allgemeinen maximal 10 Gew.-%, bezogen auf das Kopolymerisat. Bevorzugte Komonomere sind Ethylen und Buten-(1).

Die Dichte der Basisschicht liegt in der Größenordnung von etwa 0,905 bis 0,910 g/cm³.

Die Basisschicht kann auch zweckmäßige Additive, wie Antioxidantien, Antistatika, Gleitmittel, Nukleierungsmittel, Neutralisationsmittel, Farbstoffe und/oder Stabilisatoren in einer jeweils wirksamen Menge enthalten, wodurch sich dann die Dichte der Basisschicht, die im wesentlichen aus Polypropylen besteht, gegenüber den voranstehend angegebenen Werten noch geringfügig verändern kann.

Bei den Deckschichten handelt es sich in der Regel um Kopolyester in Form von thermoplastischen Polykondensationsprodukten aus zwei oder mehreren mehrbasischen aliphatischen oder aromatischen Karbonsäuren und zweiwertigen Alkoholen.

Sie können sowohl durch direkte Veresterung der Karbonsäuren und Alkohole als auch nach dem Umesterungsverfahren unter Verwendung der üblichen Katalysatoren wie Ca-, Li-, Zn- oder Mn-Salzen und Stabilisatoren wie Phosphorverbindungen hergestellt werden.

Beispiele für Kopolyester sind Polykondensate aus Terephthalsäure, Isophthalsäure und Ethylenglykol oder Butandiol. Anstelle der Isophthalsäure konnen auch Adipinsäure, Acaleinsäure oder Sebacinsäure als Komponenten verwendet werden.

Die mehrbasischen Karbonsäuren können zur Verbesserung der Haftung von Beschichtungen noch funktionelle Gruppen enthalten.

Beispiele für derartige Karbonsäuren sind die p-Hydroxybenzoesäure, das 5-Natriumsulfoisophthalat oder die Trimelittsäure.

Die Kombination der verschiedenen Polyester kann auch in Form einer Blockkondensation erfolgen.

Das Verhältnis der eingesetzten Säuren kann im Bereich von 90:10 - 10:90 Mol-% variiert werden Der Schmelzpunkt des Polykondensats und das Kristallisationsverhalten kann hierdurch den Anforderungen entsprechend eingestellt werden.

Anstelle eines Kopolyesters können auch Mischungen verschiedener Kopolyester eingesetzt werden. Weiterhin können die Kopolyester in Form von Blends mit anderen Polymeren verwendet werden.

Beispiele für die Polymeren, die in den Kopolymester eingemischt werden können, sind Polyolefin-Homo- und Kopolymere wie Polyethylen, Polypropylen, Poly-4-methylpenten, Ethylen-Vinylacetat-Kopolymere oder deren Verseifungsprodukte, Ionomere, Polyamide u.a. Die Art und Menge der zugesetzten Polymeren richtet sich nach den an die Folie gestellten Anforderungen.

Die Kopolyesterschichten können zur Optimierung der Schlupf- und Gleiteigenschaften inerte organische oder anorganische Partikel, Wachse oder Siloxane sowie weiter übliche Zusätze wie Antistatika, Antioxidantien u.a. enthalten.

In einer bestimmten Ausführungsform der Erfindung werden die Kopolyester-Schichten auf beide Seiten der Basisschicht aufgebracht. Das Zusammenführen der Basisschicht aus Polypropylen und der Kopolyesterschichten erfolgt durch Koextrusion der Schmelzen der Schichten, wobei eine sogenannte Koextrusionsmehrschichtdüse eingesetzt wird. Die Deckschichten aus Kopolyester sind ohne Schwierigkeiten mit Kaltsiegelschichten, nämlich Klebern, benetzbar und gut bedruckbar.

Es ist möglich, die eine Deckschicht mit einer Kaltsiegelschicht, d.h. mit einem Kleber zu beschichten und auf die andere Deckschicht Silikon aufzubringen.

Die Gesamtdicke der Mehrschichtfolie beträgt 10,4 bis 56 µm, insbesondere 12 bis 40 µm, wobei die Dicke der einzelnen Deckschicht 0,2 bis 3 µm, und hier vor allem 0,5 bis 1,5 µm ist. Wird beispielsweise für jede einzelne Deckschicht aus einem Kopolyester von einer Dicke von 1 µm ausgegangen und einer Dichte des Kopolyesters von 1,40 g/cm$^3$ sowie einer Dicke der Basisschicht aus Polypropylen von 10 µm, mit einer Dichte des Polypropylens von 0,905 bis 0,910 g/cm$^3$, so ergibt sich für die Mehrschichtfolie bei einer Gesamtdicke von 12 µm eine Dichte von rund 0,991 g/cm$^3$. Mit größer werdender Dicke der Basisschicht aus Polypropylen, bei gleichbleibender Dicke der Deckschichten aus Kopolyester nimmt die Dichte der Mehrschichtfolie gegenüber dem voranstehenden Wert, der in etwa die höchstmögliche Dichte dieser Mehrschichtfolie angibt, geringfügig ab.

Im folgenden sind zwei Beispiele für die Mehrschichtfolie sowie ein Vergleichsbeispiel angeführt.

Beispiel 1

Es wurde eine nicht vorbehandelte Polypropylenschicht mit beidseitig aufgebrachten Deckschichten aus Kopolyester durch eine Flachdüse koextrudiert. Die Schmelze der Deckschicht war Kopolyester. Nach dem Abkühlen der koextrudierten Folie wurde diese in Längsrichtung und anschließend in Querrichtung verstreckt und zuletzt thermofixiert. Die so erhaltene Mehrschichtfolie hat eine Dichte von etwa 0,98 g/cm$^3$ und eine Dicke von 15 µm. Die Dicke der Deckschicht betrug jeweils 1 µm. Eine Koronavorbehandlung erfolgte nicht.

Die erhaltene Folie ist leicht mit Kaltsiegelschichten, d.h. mit Klebern, benetzbar und wird als Kaschierfolie für Ansichtskarten, Bucheinbände und hochwertige Papiere verwendet. Die Folie kann verblockungsfrei bis zum Rollenkern hin zu Rollen verarbeitet werden.

Beispiel 2

Es wurde eine Basisschicht aus nichtvorbehandeltem Polypropylen mit beidseitig vorhandenen Deckschichten durch eine Flachdüse koextrudiert. Die Schmelze des die Basisschicht bildenden Polypropylens bestand weitgehend aus einem Polypropylen-Homo-Polymerisat ohne anorganische oder organische Füllstoffe. Die Schmelze der Deckschichten bestand aus Kopolyester. Es wurde wie im Beispiel 1 nach dem Abkühlen der koextrudierten Folie in Längs- und anschließend in Querrichtung verstreckt und zuletzt thermofixiert.

Die so erhaltene Mehrschichtfolie hatte eine Dichte von ca. 0,925 g/cm$^3$ und eine Dicke von 40 µm, wobei die Dicke der Kopolyester-Deckschichten jeweils 1 µm betrug. Die eine Deckschicht der so erhaltenen Mehrschichtfolie wurde mit einer Kaltsiegelschicht benetzt, wodurch sich ausgezeichnete Haftungseigenschaften der Folie ergaben. Die gegenüberliegende Deckschicht, die gleichfalls eine gute Benetzbarkeit aufwies, wurde mit Silikon beschichtet.

Die so verarbeitete Mehrschichtfolie ergibt ein Klebeband.

Vergleichsbeispiel

Es wurde eine Polypropylenfolie ohne Deckschicht bei etwa 270 °C durch eine Flachdüse koextrudiert. Die Schmelze bestand weitgehend aus einem Polypropylen-Homo-Polymerisat, und die so erhaltene Polypropylenfolie hatte eine Dichte im Bereich von 0,905 bis 0,910 g/cm³ und eine Dicke von 15 µm.

Die Folie wurde durch eine Koronaentladung beidseitig vorbehandelt und war dadurch innerhalb von drei Monaten nach der Herstellung mit einer Kaltsiegelschicht gut benetzbar, die auch während dieser Zeitspanne auf der Polypropylenschicht gut haftete. Die Folie konnte als Kaschierfolie verwendet werden, jedoch zeigte sie beim Abwickeln von der Rolle Verblockungserscheinungen, insbesondere in Nähe des Rollenkerns.

Die Mehrschichtfolie nach der Erfindung, die Kopolyesterschichten als Deckschichten auf jeder Seite der Basisschicht aus nichtvorbehandeltem Polypropylen aufweist, läßt sich ohne störende Verarbeitungshindernisse bedrucken, beschichten und kaschieren, während im Gegensatz dazu übliche Polypropylenfolien, die zur Verbesserung der Bedruck- und Kaschierbarkeit, auf beiden Seiten durch eine Koronaentladung vorbehandelt werden, zum Verblocken auf der Rolle neigen und darüber hinaus noch einen unangenehmen Geruch entwickeln.

## Patentansprüche

1. Biaxial orientierte, koextrudierte Mehrschichtfolie, mit einer Basisschicht aus Polypropylen, auf die ein- oder beidseitig Deckschichten aufgebracht sind, dadurch gekennzeichnet, daß auf die nicht vorbehandelte Basisschicht zumindest eine bedruckbare Deckschicht koextrudiert ist, die aus einem Kopolyester in Form von Polykondensaten aus Terephthalsäure, Isophthalsäure und Ethylenglykol oder Butandiol besteht, daß die Deckschicht ohne vorangehende Koronaentladung bedruckbar ist und daß die Dichte der Mehrschichtfolie 0,920 bis 0,991 g/cm³ beträgt.

2. Mehrschichtfolie nach Anspruch 1, dadurch gekennzeichnet, daß die Basisschicht beidseitig mit einer Deckschicht aus Kopolyester in Form von Polykondensaten aus Terephthalsäure, Isophthalsäure und Ethylenglykol oder Butandiol beschichtet ist.

3. Mehrschichtfolie nach Anspruch 2, dadurch gekennzeichnet, daß die eine Deckschicht mit einer Kaltsiegelschicht und die andere Deckschicht mit Silikon beschichtet ist.

4. Mehrschichtfolie nach Anspruch 2, dadurch gekennzeichnet, daß die eine Deckschicht mit einer Kaltsiegelschicht beschichtet ist.

5. Mehrschichtfolie nach den Ansprüchen 1 bis 4, dadurch gekennzeichnet, daß die Gesamtdicke der Mehrschichtfolie 10,4 - 56 µm, insbesondere 12 - 40 µm beträgt.

6. Mehrschichtfolie nach Anspruch 5, dadurch gekennzeichnet, daß die Dicke der einzelnen Deckschichten 0,2 bis 3 µm, insbesondere 0,5 bis 1,5 µm beträgt.

7. Verwendung der Mehrschichtfolie nach Anspruch 4 als Kaschierfolie für Kartenwerke, Bucheinbände, teure Papiere u.dgl.

8. Verwendung der Mehrschichtfolie nach den Ansprüchen 1 bis 3 als Klebeband.

9. Verwendung der Mehrschichtfolie nach den Ansprüchen 1 bis 2 als Verbundbestandteil mehrschichtiger Verbundmaterialien für die Verpackung.

## Claims

1. Biaxially oriented, coextruded multilayer film, having a base layer of polypropylene onto which outer layers are applied on one or both sides, characterised in that the non-pretreated base layer is coextruded with at least one printable outer layer which comprises a copolyester in the form of polycondensates of terephthalic acid, isophthalic acid and ethylene glycol or butanediol, in that the outer layer is printable without prior corona discharge, and in that the density of the multilayer film is from 0.920 to 0.991 g/cm³.

2. Multilayer film according to Claim 1, characterised in that the base layer is coated on both sides with an outer layer of copolyester in the form of polycondensates of terephthalic acid, isophthalic acid and ethylene glycol or butanediol.

3. Multilayer film according to Claim 2, characterised in that one outer layer is coated with a cold-sealable layer and the other outer layer is coated with silicone.

4. Multilayer film according to Claim 2, characterised in that one outer layer is coated with a cold-sealable layer.

5. Multilayer film according to Claims 1 to 4, characterised in that the overall thickness of the multilayer film is 10.4 - 56 µm, in particular 12 - 40 µm.

6. Multilayer film according to Claim 5, characterised in that the thickness of the individual outer layers is from 0.2 to 3 $\mu$m, in particular from 0.5 to 1.5 $\mu$m.

7. Use of the multilayer film according to Claim 4 as a lamination film for atlases, book covers, expensive papers and the like.

8. Use of the multilayer film according to Claims 1 to 3 as an adhesive tape.

9. Use of the multilayer film according to Claims 1 and 2 as a composite constituent of multilayer composite materials for packaging.

**Revendications**

1. Pellicule multicouche coextrudée, orientée biaxialement, comportant une couche de base en polypropylène, sur laquelle des couches de recouvrement sont appliquées d'un côté ou des deux, caractérisée en ce que sur la couche de base non prétraitée est coextrudée au moins une couche de recouvrement apte à être imprimée, qui est constituée d'un copolyester sous forme de produits de polycondensation obtenus à partir d'acide téréphtalique, d'acide isophtalique et d'éthylèneglycol ou de butanediol, en ce que la couche de recouvrement est apte à être imprimée sans décharge en couronne préliminaire, et en ce que la densité de la pellicule multicouche va de 0,920 à 0,991 g/cm$^3$.

2. Pellicule multicouche selon la revendication 1, caractérisée en ce que la couche de base est revêtue des deux côtés avec une couche de recouvrement en copolyester sous forme de produits de polycondensation obtenus à partir d'acide téréphtalique, d'acide isophtalique et d'éthylèneglycol ou de butanediol.

3. Pellicule multicouche selon la revendication 2, caractérisée en ce qu'une couche de recouvrement est revêtue avec une couche de soudage à froid, et l'autre couche de recouvrement est enduite de silicone.

4. Pellicule multicouche selon la revendication 2, caractérisée en ce qu'une couche de recouvrement est revêtue avec une couche de soudage à froid.

5. Pellicule multicouche selon les revendications 1 à 4, caractérisée en ce que l'épaisseur totale de la pellicule multicouche va de 10,4 à 56 $\mu$m, en particulier de 12 à 40 $\mu$m.

6. Pellicule multicouche selon la revendication 5, caractérisée en ce que l'épaisseur des couches de recouvrement individuelles va de 0,2 à 3 $\mu$m, en particulier de 0,5 à 1,5 $\mu$m.

7. Utilisation de la pellicule multicouche selon la revendication 4, en tant que pellicule de contrecollage pour cartes, reliures de livres, papiers de luxe et similaires.

8. Utilisation de la pellicule multicouche selon les revendications 1 à 3, en tant que ruban adhésif.

9. Utilisation de la pellicule multicouche selon les revendications 1 et 2, en tant que composant de matériaux composites multicouches pour l'emballage.